# EUROPÄISCHE PATENTSCHRIFT

(11) **EP 1 101 984 B1**
(45) Veröffentlichungstag und Bekanntmachung des Hinweises auf die Patenterteilung: **15.09.2004**
(21) Anmeldenummer: 00125568.6
(22) Anmeldetag: 22.11.2000
(51) Int. Cl.: F16K 15/02

(54) **Rückschlagventil**
Check valve
Soupape anti-retour

(30) Priorität: 22.11.1999 DE 19956181
(43) Veröffentlichungstag der Anmeldung: 23.05.2001
(73) Patentinhaber: Stein, Günter, 89415 Lauingen (DE)
(72) Erfinder: Stein, Günter, 89415 Lauingen (DE)
(74) Vertreter: Schuster, Gregor, Dipl.-Ing.

(56) Entgegenhaltungen:
- DE-A- 3 627 865
- DE-A- 4 025 488
- US-A- 2 670 922
- US-A- 2 755 816

## Beschreibung

Die Erfindung geht aus von einem Steuerventil für strömende Medien mit einem aus einer Kugel hergestellten Ventilglied nach der Gattung des Hauptanspruchs. Steuerventile mit Kugeln als Steuerglied werden für strömende Medien sehr häufig eingesetzt, da Kugeln nach raffinierten Verfahren in großen Stückzahlen sehr günstig herstellbar sind und eine hohe Dichtqualität des Ventils gewährleisten können. Nachteilig bei solchen Kugelventilen ist, dass die Kugel selbst mit ihrem Durchmesser die Mindestabmessungen des Ventilgehäuses bestimmt, in dem die Kugel geführt sein muss, was in manchen Fällen zwingt, auf Ventilarten zurückzugreifen, die teurer und weniger präzise arbeiten, dafür aber kleinere Abmessungen ermöglichen.

Bei einem bekannten Steuerventil der gattungsgemäßen Art (DE-PS 40 25 488) ist das aus einer Kugel hergestellte Ventilglied, auf der dem Ventilsitz abgewandten Seite abgeflacht und es sind zwischen der Dichtkalotte und der Bohrung Ausnehmungen vorhanden, die lediglich durch einen Steg getrennt sind. Über diese Ausnehmungen strömt das Medium in eine Buchse durch das Ventilgehäuse, wobei diese Buchse zur Abstützung der Schließfeder dient. Vor allem aber weist diese Buchse einen Außenbund auf, an den die Schließfeder angreift, und die auf der Stirnseite des Ventilgliedes, und zwar dort auf dem Steg aufliegt. Hierdurch wird vermieden, dass die Schließfeder mit ihrem dem Ventilglied zugewandten Ende in die Ausnehmungen eindringt und es wird außerdem erreicht, dass über die Buchse und deren Außenbund eine axiale Führung in der Bohrung erfolgt, die insbesondere auch ein Abkippen des Ventilgliedes vermeidet. Nachteilig ist dabei, dass aufgrund dieser Buchse der freie Durchgang für das strömende Medium eingeschränkt wird.

Bei einem anderen bekannte Steuerventil (EP-PS 0 302 068) sind in der Mantelfläche der Kugel zwischen Ventilsitz und der radialen Führung Ausnehmungen vorgesehen, die sich auf den Umfang verteilen oder es ist eine zentrale Ausnehmung vorgesehen, die über Bohrungen mit dem Ventilsitzbereich verbindbar ist. Das bewegliche Ventilglied ist durch eine Schraubenfeder belastet, deren Windungsdurchmesser kleiner ist als der Durchmesser des Ventilgliedes um den Strom des Mediums so wenig wie möglich zu behindern. Hiermit sind gewisse Nachteile verbunden, vor allem muss eine solche Feder speziell geführt werden, und das Ventilglied neigt zum Abkippen, weshalb es gegebenenfalls ebenfalls geführt werden muss. In jedem Fall jedoch ist der freie Durchströmquerschnitt dieses bekannten Steuerventils trotz Ausnehmungen im Ventilglied eingeschränkt.

Das erfindungsgemäße Steuerventil mit den kennzeichnenden Merkmalen des Hauptanspruchs hat demgegenüber den Vorteil, dass ein maximaler Durchströmquerschnitt erreicht wird und ein solches Steuerventil entsprechend klein gebaut werden kann, d.h. ein extrem kleines Ventil mit maximalem Querschnitt erreichbarist, däss die Bearbeitung sehr einfach, beispielsweise durch Erodieren, erfolgen kann und dadurch eine sehr preisgünstige Herstellung ermöglicht wird und dass vorteilhafterweise aufgrund der geringen Masse eine hohe Schaltfrequenz möglich ist. Der Steg bietet eine hohe Festigkeit bei geringer Masse und großem verbleibenden Durchgangsquerschnitt. Dies wird dadurch erreicht, dass für die Führung des Ventilgliedes in der Bohrung lediglich zwei diametral gegenüberliegende verhältnismäßig schmale Kugelabschnitte vorgesehen, sind, die durch einen schmalen, dieLängsachse des Ventilgliedes querenden Steg miteinander verbunden sind. Beiderseits des Steges ist dadurch ein verhältnismäßig großer Freiraum für den Durchtritt des Mediums entstanden. Die dem Dichtsitz abgewandte ebene Stirnfläche des Ventilgliedes weist demzufolge eine doppelt-T-förmige Fläche auf, aufder sich die Schließfeder abstützt. Die Schließfeder ist in an sich bekannter Weise als Schraubenfeder ausgebildet, deren Kernraum vom Medium durchströmt wird, nachdem es durch die Ausnehmungen geströmt ist. Hierdurch kann der Windungsdurchmesser des Federdrahtes verhältnismäßig groß gehalten werden und es kann die Schraubenfeder selber als Mittel zur Verhinderung eines Kippens des Ventilglieds dienen. Aufgrund der größeren möglichen Federkraft kann ein solches Steuerventil auch als Druckbegrenzungsventil odgl. eingesetzt werden.

Nach einer vorteilhaften Ausgestaltung der Erfindung ist die Stirnfläche der Kugelabschnitte im Bereich der Stirnseite breiter als die Stirnfläche des Steges ausgeführt. Hierdurch entsteht eine noch günstigere Auflage für das der Stirnseite zugewandte Ende der Schließfeder, bzw. die Gesamtauflage von Schließfeder zu Ventilglied bzw. Stirnseite wird derart vergrößert, dass ein Abkippen des Ventilgliedes durch einseitigen Angriff der Feder bzw. ein Eindringen des Federendes in eine der Ausnehmungen vermieden wird. Bei dieser erfindungsgemäßen Gestaltung wird jedoch der freie Durchströmquerschnitt nicht verringert.

Nach einer weiteren vorteilhaften Ausgestaltung der Erfindung verlaufen die einander zugewandten Seiten der Kugelabschnitte parallel zueinander, so dass nahezu keine Änderung des Querschnittes der Ausnehmungen innerhalb des Ventilglieds gegeben ist.

Nach einer vorteilhaften Ausgestaltung der Erfindung verjüngt sich der Steg in Strömungsrichtung was nicht nur strömungsökonomisch ist, sondern auch der Herstellungstechnik entgegenkommt. Hierbei kann das freie Stegende sehr schmal ausgebildet sein ohne Stabilitätsmangel, so dass die beiden durch die Ausnehmungen strömenden Teilmengen des Mediums sich nahezu wirbelfrei miteinander vereinigen können.

Nach eine weiteren vorteilhaften Ausgestaltung der Erfindung ist in den verbleibenden Kugelabschnitten auf der Stirnseite im Randbereich des Ventilsgliedes eine Abdrehung als Auflagefläche der Schließfeder vorhanden. Durch die Schließfeder kann somit ein Verkippen des Ventilgliedes noch sicherer verhindert werden, so dass auf zusätzliche Führungsmittel des Ventilsgliedes bei der Axialbewegung verzichtet werden kann.

In einer weiteren vorteilhaften Ausgestaltung der Erfindung behält das Ventilglieds nach Erreichen seines größter Durchmessers diesen noch über eine bestimmte Breite bei, so dass die ebene Stirnseite wenig oberhalb des Äquators der von Kalotte und den Kugelabschnitten gebildeten Kugel liegt. Dadurch wird eine verbesserte Führung des Ventilgliedes in der Bohrung erreicht.

Weitere Vorteile und vorteilhafte Ausgestaltungen der Erfindung sind der nachfolgenden Beschreibung, der Zeichnung und den Ansprüchen entnehmbar.

Ein Ausführungsbeispiele des Gegenstandes der Erfindung ist in der Zeichnung dargestellt und im folgenden näher beschrieben. Es zeigen:
- Fig. 1: einen Längsschnitt durch ein Rückschlagventil;
- Fig. 2: einen Längsschnitt durch das bewegliche Ventilglied aus Fig. 1 um 90° verdreht, gemäß der Linie II - II in Fig. 3 und
- Fig. 3: einen Querschnitt durch dieses Ventilglied gemäß der Linie III - III in Fig. 2

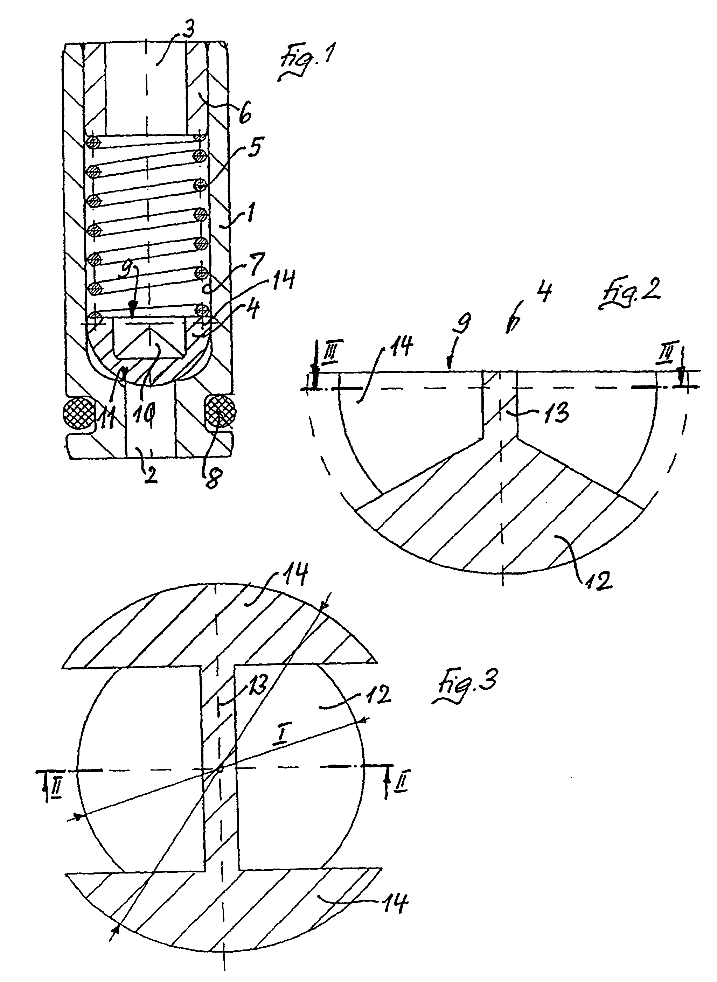

In Fig. 1 ist ein als Einsteckventil ausgebildetes Rückschlagventil dargestellt mit einem Gehäuse 1 mit einem Zuströmanschluss 2 und einem Abströmanschluss 3, dann darüber hinaus einem beweglichen Ventilglied 4 und einer Schließfeder 5. Die Schließfeder 5 stützt sich an einer Buchse 6 ab, die in einer Innenbohrung 7 des Gehäuses angeordnet ist. Außerdem ist ein Rundschnurring 8 vorgesehen, mit dem das Ventilgehäuse innerhalb einer Bohrung, in die es als Steuerglied eingesetzt ist und die nicht dargestellt ist, abdichtet. Die Feder 5 ist als Schraubenfeder ausgebildet und wird radial in der Innenbohrung 7 geführt. Das Ventilglied 4 ist aus einer Kugel hergestellt, deren oberer Abschnitt entfernt wurde, so dass dort eine Stirnfläche 9 besteht, an der sich die Schließfeder 5 mit ihrer der Buchse 6 abgewandten Seite abstützt. Aufgrund der Abflachungen an den jeweiligen Enden der Schließfeder 5 und deren Führung in der Innenbohrung 7 wird ein Verkippen des beweglichen Ventilgliedes 4 beim Öffnen oder Durchströmen vermieden. Im Ventilglied 4 sind Ausnehmungen 10 vorgesehen, wie sie in Fig. 2 und 3 näher beschrieben sind und welche zur Durchströmung des Mediums dienen, nachdem das Ventilglied 4 von einem im Gehäuse 1 angeordneten Ventilsitz 11 abgehoben hat.

Wie in Fig. 2 und 3 dargestellt, ist der untere Teil des Ventilgliedes 4 als Kalotte 12 ausgebildet, an die sich nach oben ein Steg 13 anschließt und wobei beiderseits des Steges Kugelabschnitte 14 stehenbleiben, die wie in Fig. 1 erkennbar, radial in der Bohrung 7 geführt werden. Diese Kugelabschnitte 14 weisen wie in Fig. 3 dargestellt den Außendurchmesser der Kugel auf. Die Kalotte 12 hingegen weist einen Kalottenbodendurchmesser I auf, welcher in jedem Fall größer ist als der Ventilsitzdurchmesser 11, um ein sicheres Schließen zu gewährleisten. Die obere Stirnseite 9 des Ventilglieds 4 liegt etwas höher als der durch die Schnittlinie III gezeigte Äquator der Kugel um eine sichere radiale Führung zu gewährleisten.

Erfindungsgemäß können die Kugelabschnitte 14 auch zur Gewichtsersparnis mit Ausnehmungen versehen sein, so lange die radiale Führung beibehalten wird.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Steuerventil für strömende Medien,
- mit einem aus einer Kugel hergestellten radiale Führungsabschnitte und eine mit einem Ventilsitz (11) zusammenwirkende Kalotte (12) aufweisenden beweglichen Ventilglied (4),
- mit einem eine der axialen sowie radialen Führung des Ventilgliedes (4) dienende Bohrung (7), einem kreisförmigen Ventilsitz (11) für die Kalotte (12) sowie einen Zu- und einen Abströmanschluss (2, 3) für das Medium aufweisenden Ventilgehäuse (1),
- mit Ausnehmungen (10) in dem Ventilglied (4) zwischen der Kalotte (12) stromab des Ventilsitzes (11) und der Bohrung für den Durchgang des strömenden Mediums,
- mit einer auf das Ventilglied (4) in Schließrichtung wirkenden, als Schraubenfeder ausgebildeten Schließfeder (5) und
- mit einer der Schließfeder (5) zugewandten von den Ausnehmungen (10) unterbrochenen ebenen Stirnseite (9) auf der Rückseite des Ventilgliedes (4), an der sich mindestens mittelbar die Schließfeder (5) abstützt,
**dadurch gekennzeichnet**,
- dass das Ventilglied (4) im Bereich seiner Führung in der Bohrung (7) zwei diametral gegenüberliegende, durch einen schmalen, die Längsache des Ventilgliedes (4) querenden Steg (13) miteinander verbundene Kugelabschnitte (14) aufweist, wobei zwischen den beiden Kugelabschnitten (14) zwei diametral gegenüberliegende und durch den Steg (13) getrennte Ausnehmungen (10) entstanden sind,
- dass das Medium nach Durchströmen der Ausnehmungen (10) unmittelbar durch den Kernraum der Schließfeder (5) strömt,
- dass der Außendurchmesser der Schließfeder (5) nahezu dem Innendurchmesser der Bohrung (7) entspricht, so dass die Bohrung (7) als radiale Führung der Schließfeder (5) dient, und
- dass sich die Schließfeder (5) auf den in der Ebene der Stirnseite (9) liegenden Stirnfläche der Kugelabschnitte (14) abstützt.

2. Steuerventil nach Anspruch 1,
**dadurch gekennzeichnet,**
**dass** die Stirnfläche der Kugelabschnitte (14) im Bereich der Stirnseite (9) breiter ist als die Stirnfläche des Steges (13).

3. Steuerventil nach Anspruch 1 und 2,
**dadurch gekennzeichnet,**
**dass** die einander zugewandten Innenflächen der Kugelabschnitte (14) parallel zueinander verlaufen.

4. Steuerventil nach Anspruch 1 und 2,
**dadurch gekennzeichnet,**
**dass** sich der Steg (13) in Strömungsrichtung verjüngt.

5. Steuerventil nach Anspruch 1 und 2,
**dadurch gekennzeichnet,**
**dass** eine Abdrehung an den Stirnflächen des Ventilgliedes (4) vorhanden ist, die als Auflagefläche für die Schließfeder (5) dient.

6. Steuerventil nach Anspruch 1,
**dadurch gekennzeichnet,**
**dass** die ebene Stirnseite (9) wenig oberhalb des Äquators der von der Kalotte (12) und den Kugelabschnitten (14) gebildeten Kugel liegt.

## Claims

1. A control valve for flowing media,
- with a movable valve member (4) that is made from a ball and comprises radial guide portions and a spherical cap (12) cooperating with a valve seat (11),
- with a hole (7) for guiding the valve member (4) in both the axial and the radial direction, with a circular valve seat (11) for the spherical cap (12) and with a valve box (1) comprising connection fittings for the inflow and the outflow lumen (2, 3) for the medium,
- with recesses (10) provided in the valve member (4) between the spherical cap (12) downstream of the valve seat (11) and the passage hole for the flowing medium,
- with a closing spring (5) that is configured to be a helical spring and acts onto the valve member (4) in the closing direction and
- with a level end face (9) turned toward the closing spring (5) and equipped with the recesses (10) that is located on the rear side of the valve member (4) and supports, at least indirectly, the closing spring (5),
**characterized in**
- **that** the valve member (4) comprises, in the region of its guide area within said hole (7), two ball portions (14) that are disposed diametrically opposite each other and are joined together by a narrow crosspiece (13) oriented across the longitudinal axis of the valve member (4), two diametrically opposite recesses (10) separated by said crosspiece (13) forming between the two ball portions (14),
- **that** the medium immediately flows through the core space of the closing spring (5) after flowing through the recesses (10),
- **that** the outside diameter of the closing spring (5) nearly equals the inside diameter of the hole (7) so that the hole (7) serves for radially guiding the closing spring (5), and
- **that** the closing spring (5) is supported by the end surfaces of the ball portions (14) lying in the plane of the end face (9).

2. The control valve in accordance with claim 1,
**characterized in that**
the width of the end surface of the ball portions (14) in the region of the end face (9) is greater than the width of the end surface of the crosspiece (13).

3. The control valve in accordance with claim 1 and 2,
**characterized in that**
the confronting inner surfaces of the ball portions (14) are oriented parallel to each other.

4. The control valve in accordance with claim 1 and 2,
**characterized in that**
the crosspiece (13) tapers in the direction of flow.

5. The control valve in accordance with claim 1 and 2,
**characterized in that**
the end surfaces of the valve member (4) are provided with a lathe cut area that serves as a bearing area for the closing spring (5).

6. The control valve in accordance with claim 1,
**characterized in that**
the level end face (9) lies slightly above the equator of the ball formed by the spherical cap (12) and the ball portions (14).

## Revendications

1. Clapet pilote pour fluides en mouvement
- avec un élément de clapet (4) mobile réalisé à partir d'une bille et comportant des parties de guidage radiales et une calotte (12) coopérant avec un siège de clapet (11),
- avec une cage (1) de clapet comportant un trou (7) pour le guidage axial et radial de l'élément de clapet (4), avec un siège de clapet (11) circulaire pour la calotte (12) ainsi qu'avec un raccord pour l'admission et pour l'écoulement (2, 3) du fluide,
- avec des évidements (10) ménagés dans l'élément de clapet (4) entre la calotte (12) en aval du siège de clapet (11) et le trou pour le passage du fluide en mouvement,
- avec un ressort de rappel (5) provoquant la fermeture du clapet conformé en forme de ressort hélicoïdal et agissant dans la direction de fermeture de l'élément de clapet (4) et
- avec une face d'extrémité (9) plane située sur la face arrière de l'élément de clapet (4) et tournée vers le ressort de rappel (5) dans laquelle sont pratiqués les évidements (10) et contre laquelle vient en appui, indirectement du moins, le ressort de rappel (5),
**caractérisé en ce**
- **que** l'élément de clapet (4) comporte, dans sa zone de guidage dans le trou (7), deux parties de bille (14) diamétralement opposées reliées entre elles par une entretoise (13) étroite s'étendant en travers de l'axe longitudinal de l'élément de clapet (4), deux évidements (10) diamétralement opposés séparés par l'entretoise (13) étant ainsi ménagés entre les deux parties de bille (14),
- **que** le fluide traverse l'espace central du ressort de rappel (5) tout de suite après avoir passé par les évidements (10),
- **que** le diamètre extérieur du ressort de rappel (5) correspond à peu près au diamètre intérieur du trou (7) de sorte que le trou (7) sert de guidage radial du ressort de rappel (5) et
- **que** le ressort de rappel (5) prend appui sur les surfaces d'extrémité des parties de bille (14) se situant dans le plan de la face d'extrémité (9).

2. Clapet pilote selon la revendication 1,
**caractérisé en ce**
**qu'**à la hauteur de la face d'extrémité (9) la surface d'extrémité des parties de bille (14) est plus large que la surface d'extrémité de l'entretoise (13).

3. Clapet pilote selon la revendication 1 et 2,
**caractérisé en ce**
**que** les surfaces internes des parties de bille (14) qui sont situées en regard l'une de l'autre sont parallèles.

4. Clapet pilote selon la revendication 1 et 2,
**caractérisé en ce**
**que** l'entretoise (13) s'amincit dans la direction de l'écoulement.

5. Clapet pilote selon la revendication 1 et 2,
**caractérisé en ce**
**qu'**une coupe pratiquée par tournage est prévue sur les surfaces d'extrémité de l'élément de clapet (4), cette coupe servant de surface d'appui pour le ressort de rappel (5).

6. Clapet pilote selon la revendication 1,
**caractérisé en ce**
**que** la face d'extrémité (9) plane se situe légèrement au-dessus de l'équateur de la bille formée par la calotte (12) et les parties de bille (14).
